# EUROPÄISCHE PATENTSCHRIFT

(11) **EP 0 779 563 B1**
(45) Veröffentlichungstag und Bekanntmachung des Hinweises auf die Patenterteilung: **12.04.2000**
(21) Anmeldenummer: 96119846.2
(22) Anmeldetag: 11.12.1996
(51) Int. Cl.: G05B 7/02

(54) **Regler-Ausgangsmodul**
Controller output modul
Module de sortie d'un régulateur

(30) Priorität: 14.12.1995 DE 19546637
(43) Veröffentlichungstag der Anmeldung: 18.06.1997
(73) Patentinhaber: HONEYWELL AG, 63067 Offenbach (DE)
(72) Erfinder: Hinkelmann, Horst, 71116 Gärtringen (DE); Jauss, Fritz, 71101 Schönaich (DE)
(74) Vertreter: Herzbach, Dieter, Dipl.-Ing.

(56) Entgegenhaltungen:
- EP-A- 0 604 780
- WO-A-91/01020
- DE-A- 2 508 824
- DE-A- 2 614 924
- DE-A- 2 710 581
- DE-A- 3 036 024
- DE-A- 4 132 778
- US-A- 4 141 065
- US-A- 4 451 879

## Beschreibung

Die vorliegende Erfindung bezieht sich auf einen analogen Regler-Ausgangsmodul nach dem aus US-A-41 41 065 bekannten Gattungsbegriff des Patentanspruches 1.

Elektronische Regler weisen üblicherweise Ausgangsmodule auf, die analoge Ausgangssignale von 0 - 10V zur Ansteuerung von Stellorganen, wie z.B. Pumpen, Mischer, Brenner, usw. liefern. Bei der Inbetriebnahme des Reglers bzw. bei einem Ausfall der Zentraleinheit (CPU) des im Regler enthaltenen Mikroprozessors muß eine Möglichkeit vorgesehen sein, die analogen Ausgänge manuell zu steuern. Da diese analogen Ausgänge in großer Anzahl vorzusehen sind, beanspruchen die bisherigen Lösungen mit einem Automatik/Hand-Umschalter und einem Drehpotentiometer pro Ausgang zum einen relativ viel Platz und sind zum anderen auch kostspielig.

Es wurde auch bereits vorgeschlagen, den Automatik/Hand-Umschalter und das Potentiometer in einem Element zu vereinigen, in dem das Potentiometer mit einem Rastschalter versehen wurde, wobei unterhalb der Raststellung des Rastschalters der Automatikbetrieb und oberhalb der Raststellung des Rastschalters der Handbetrieb mit einem entsprechenden Potentiometer-Abgriff vorgegeben wurde.

Ausgehend von diesem Stand der Technik ist es daher die Aufgabe, einen derartigen Regler-Ausgangsmodul anzugeben, der weniger Platz beansprucht, kostengünstiger herzustellen ist, und ohne mechanische Schalterbetätigung auskommt.

Die Lösung dieser Aufgabe gelingt gemäß den kennzeichnenden Merkmalen des Patentanspruches 1. Weitere vorteilhafte Ausgestaltungen des erfindungsgemäßen Regler-Ausgangsmoduls sind den abhängigen Ansprüchen entnehmbar.

Anhand der Figuren der beiliegenden Zeichnungen sei im folgenden die Lösung gemäß dem Stand der Technik sowie die erfindungsgemäße Lösung beschrieben. Es zeigen:
- Figur 1: eine Lösung gemäß dem Stand der Technik;
- Figur 2: eine Lösung gemäß der vorliegenden Erfindung;
- Figur 2a: eine vergrößerte Einzelheit aus Figur 2; und
- Figur 3: ein Schaltungsbeispiel der erfindungsgemäßen Lösung.

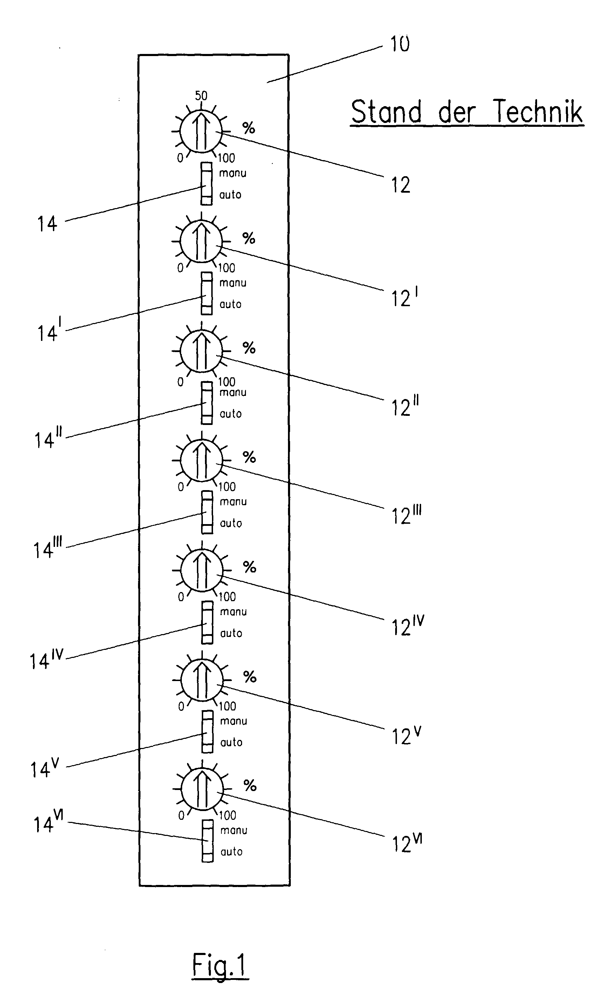

Gemäß Figur 1 ist ein analoger Ausgangsmodul 10 gemäß dem Stand der Technik dargestellt, der eine Reihe von Drehpotentiometern 12, 12', 12", ... und jeweils zugeordnete Hand/Automatik-Umschalter 14, 14', 14",... aufweist. In der Stellung "Auto" wird der Ausgang des Moduls durch den Regler automatisch gesteuert, während in der Stellung "Manu" ein an den Regler angeschlossenes Stellorgan, beispielsweise mit einer Spannung zwischen 0 und 10 V, angesteuert werden kann. Mit jedem Potentiometer kann ein Kanal und ein zugeordnetes Stellorgan gesteuert werden.

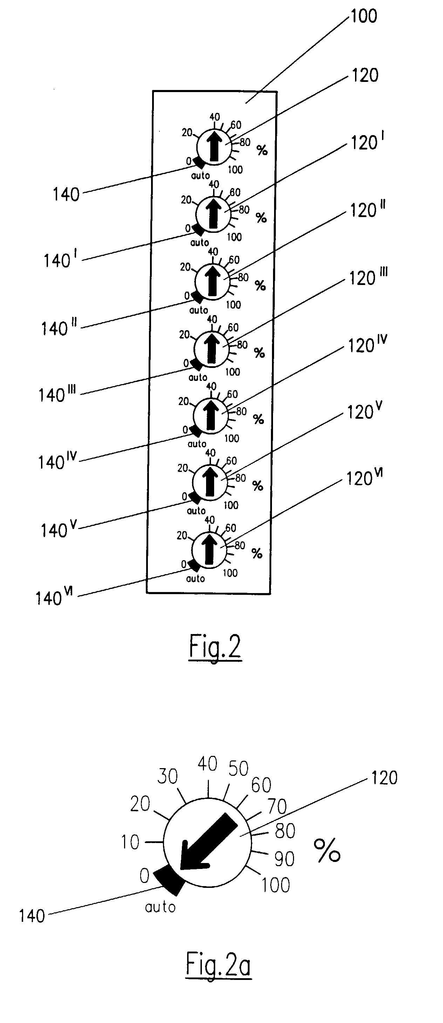

Figur 2 zeigt die prinzipielle Lösung gemäß der vorliegenden Erfindung, gemäß der in einem analogen Ausgangsmodul 100 der Hand/Automatik-Umschalter 140, 140', 140", ... jeweils in ein zugeordnetes Drehpotentiometer 120, 120', 120'', ... integriert ist. Figur 2a zeigt die gleiche Anordnung vergrößert für einen einzelnen Kanal des Regler-Ausgangsmoduls.

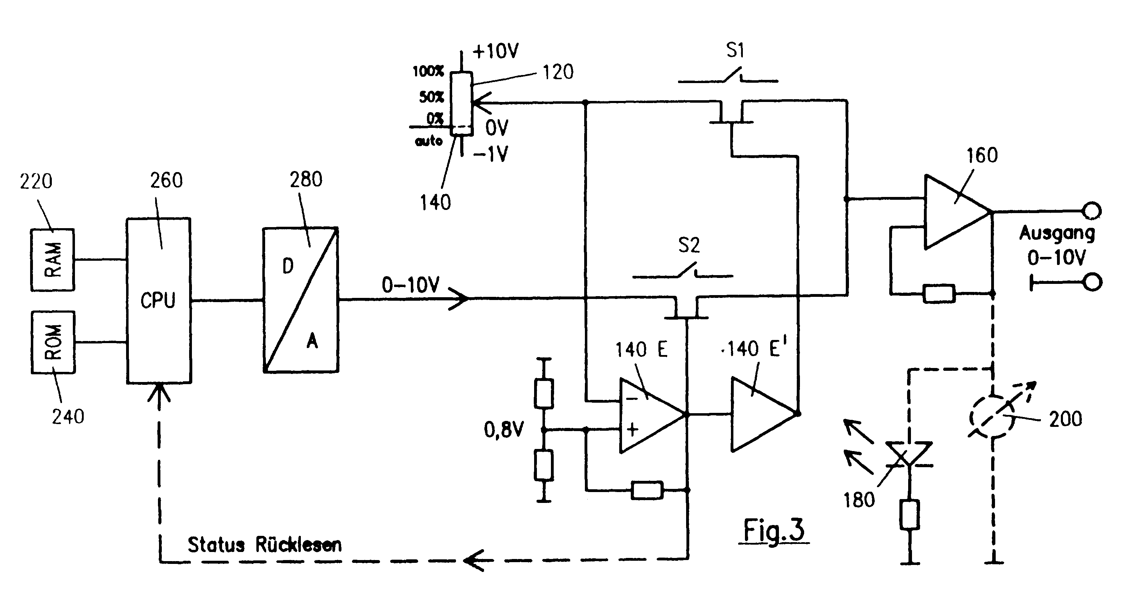

Figur 3 zeigt die Lösung der Hand/Automatik-Umschaltung. gemäß der vorliegenden Erfindung. Das Potentiometer 120 wird zwischen einer leicht negativen Spannung von z.B. -1V und einer positiven Spannung von z.B. 10V betrieben, wobei der Bereich 140 zwischen -1V und 0V zur Herleitung der Hand/Automatik-Umschaltung ausgewertet wird. Die Verwendung einer leicht negativen Spannung und einer positiven Spannung, die den vollen analogen Ausgangs-Ansteuerbereich umfaßt, ist nur als Beispiel anzusehen. Prinzipiell kann das Potentiometer auch zwischen zwei Spannungen gleicher Polarität betrieben und eine Stellung des Potentiometers im voraus festgelegt werden, an der die Umschaltung zwischen automatischem und manuellem Betrieb erfolgt. Jeder am Potentiometer abgegriffene Spannungswert jenseits der Umschaltstellung kann durch Verstärkung auf den z.B. erforderlichen 10V-Bereich gedehnt werden.

Vorzugsweise ist im Übergangsbereich zwischen positiver und negativer Spannung zwischen Potentiometer und Abgriff eine Raststellung vorgesehen. Das Potentiometer 120 ist an einen Differenzverstärker 140E angeschlossen, dem über einen Spannungsteiler eine Referenzspannung von 0,8V vorgegeben wird, so daß der Ausgang des Differenzverstärkers 140E umschaltet, wenn der Bereich 140 des Potentiometers 120 erreicht wird. Mit dem Ausgang des Differenzverstärkers 140E wird ein elektronischer Schalter S2 geschlossen, wodurch die Umschaltung auf den Automatikbetrieb erfolgt. Das Signal des Differenzverstärkers 140E wird auf einen Inverter 140E' geschaltet, dessen Ausgang einen weiteren elektronischen Schalter S1 betätigt, so daß das Potentiometer 120 vom Ausgang des Reglermoduls abgetrennt wird, wenn der Automatikbetrieb eingeschaltet ist. Verwendet man als elektronische Schalter S1, S2, beispielsweise Transistoren unterschiedlichen Leitfähigkeitstyps, d.h. npn- und pnp-Transistoren, so kann die Umschaltung der beiden Schalter S1 und S2 auch alleine durch den Ausgang des Differenzverstärkers 140E bewirkt werden.

Ein Trennverstärker 160 dient der Entkopplung des Ausgangs bei dem Hand- und dem Automatikbetrieb. Der Ausgang des Reglermoduls kann optisch über eine Leuchtdiode 180 oder einen sonstigen Indikator 200 angezeigt werden.

Im Automatikbetrieb wird das Regler-Ausgangssignal durch ein Mikroprozessorsystem vorgegeben, das eine Zentraleinheit (CPU) 260 mit zugeordnetem Speicher mit wahlfreiem Zugriff RAM-220 und zugeordnetem Programm-Festwertspeicher ROM-240 aufweist, dessen Signale über einen Digital/Analog-Wandler 280 auf den Ausgang des Moduls gegeben werden, wenn der Schalter S2 geschlossen ist. Die Zentraleinheit (CPU) 260 liest an einem Anschluß (Port) den Status am Ausgang des Differenzverstärkers 140E ein, so daß z.B. bei einem Anschluß des Reglers an einen Bus einer ebenfalls an den Bus angeschlossenen Zentrale der Zustand des Reglers (Hand/Automatik) signalisiert werden kann.

## Patentansprüche

1. Regler-Ausgangsmodul zur Ansteuerung von Stellorganen mit mindestens einem Schalter zur Umschaltung von automatischem Betrieb auf manuellen Betrieb und mit einem zwischen zwei Spannungen betriebenen Potentiometer (120) zur Steuerung des analogen Ausganges im manuellen Betrieb,
**dadurch gekennzeichnet,** daß die in einer vorbestimmten Stellung des Potentiometers (120) abgegriffenen Spannung in einem Differenzverstärker (140E, 140E') mit einer Referenzspannung verglichen wird und daß von dem Differenzverstärker (140E,140E') gesteuerte und zur Umschaltung von manvellen auf automstischen Betrieb und umgekehrt vorgesehene elektronische Schalter (S1,S2) angeordnet sind, die gegenläufig betätigt werden und im Wege zwischen Potentiometer-Abgriffbzw. Automatik-Ausgang und Ausgang des Moduls angeordnet sind.

2. Regler-Ausgangsmodul nach Anspruch 1, **dadurch gekennzeichnet,** daß die vorbestimmte Stellung im unteren Einstellbereich des Potentiometers (120) liegt und daß beim Unterschreiten der vorbestimmten Stellung durch den Differenzverstärker (140E, 140E') die elektronischen Schalter (S1, S2) betätigt werden.

3. Regler-Ausgangsmodul nach Anspruch 2, **dadurch gekennzeichnet**, daß das Potentiometer (120) zwischen einer positiven Spannung (+10V) und einer negativen Spannung (-1V) betrieben wird.

4. Regler-Ausgangsmodul nach Anspruch 1, **dadurch gekennzeichnet,** daß der Ausgang des Differenzverstärkers (140E) wenigstens einen Transistor (S1, S2) als elektronischen Schalter betätigt.

5. Regler-Ausgangsmodul nach Anspruch 4, **dadurch gekennzeichnet,** daß zwei Transistoren (S1, S2) unterschiedlichen Leitfähigkeitstyps angeordnet sind, die von dem Ausgang des Differenzverstärkers (140E) angesteuert werden, von denen einer im Wege des Handsteuersignales und der andere im Wege des Automatiksignales angeordnet ist.

6. Regler-Ausgangsmodul nach Anspruch 4, **gekennzeichnet durch** zwei Transistoren (S1, S2) gleichen Leitfähigkeitstyps und die Reihenschaltung eines Inverters (140E') zu dem Differenzverstärker (140E), wobei ein Transistor (S2) von dem Differenzverstärker und der andere Transistor (S1, von dem Inverter angesteuert wird.

7. Regler-Ausgangsmodul nach Anspruch 3, **dadurch gekennzeichnet,** daß zwischen Potentiometer (120) und Abgriff im Übergangsbereich zwischen positiver und negativer Spannung eine Raststellung vorgesehen ist.

8. Regler-Ausgangsmodul nach Anspruch 1, mit einem im Automatikbetrieb das Regler-Ausgangssignal liefernden Mikroprozessorsystem, welches eine zentrale Verarbeitungseinheit (CPU) aufweist, **dadurch gekennzeichnet,** daß über einen Anschluß der zentralen Verarbeitungseinheit (CPU - 260) der Status am Ausgang des Differenzverstärkers (140E) eingelesen wird.

## Claims

1. Controller output module for driving actuating elements, having at least one switch for changing over from automatic operation to manual operation and having a potentiometer (120) operated between two voltages and serving to control the analogue output in manual operation,
characterized in that the voltage tapped off in a predetermined position of the potentiometer (120) is compared with a reference voltage in a differential amplifier (140E,140E'), and in that electronic switches (S1,S2) are arranged which are controlled by the differential amplifier (140E,140E'), are provided for the changeover from manual to automatic operation and vice versa, are activated mutually oppositely and are arranged in the path between the potentiometer tap and the automatic output, respectively, and the output of the module.

2. Controller output module according to Claim 1, characterized in that the predetermined position lies in the lower setting range of the potentiometer (120), and in that the electronic switches (S1,S2) are activated by the differential amplifier (140E,140E') when the predetermined position is undershot.

3. Controller output module according to Claim 2, characterized in that the potentiometer (120) is operated between a positive voltage (+10V) and a negative voltage (-1V).

4. Controller output module according to Claim 1, characterized in that the output of the differential amplifier (140E) activates at least one transistor (S1,S2) as electronic switch.

5. Controller output module according to Claim 4, characterized in that two transistors (S1,S2) of different conductivity types are arranged which are driven by the output of the differential amplifier (140E), of which transistors one is arranged in the path of the manual control signal and the other in the path of the automatic signal.

6. Controller output module according to Claim 4, characterized by two transistors (S1,S2) of the same conductivity type and the series circuit formed by an inverter (140E') and the differential amplifier (140E), one transistor (S2) being driven by the differential amplifier and the other transistor (S1) being driven by the inverter.

7. Controller output module according to Claim 3, characterized in that a latching position is provided between the potentiometer (120) and the tap in the transition region between positive and negative voltage.

8. Controller output module according to Claim 1, having a microprocessor system which supplies the controller output signal in automatic operation and has a central processing unit (CPU), characterized in that the status at the output of the differential amplifier (140E) is read in via a terminal of the central processing unit (CPU-260).

## Revendications

1. Module de sortie de régulateur pour commander des organes de réglage, comportant au moins un commutateur pour passer du fonctionnement automatique au fonctionnement manuel et comportant un potentiomètre (120) branché entre deux tensions pour commander la sortie analogique en fonctionnement manuel, caractérisé par le fait que la tension détectée dans une position prédéfinie du potentiomètre (120) est comparée avec une tension de référence dans un amplificateur différentiel (140E, 140E') et que sont installés des commutateurs électroniques (S1, S2) commandés par l'amplificateur différentiel (140E, 140E') et prévus pour passer du fonctionnement manuel au fonctionnement automatique et inversement, lesquels sont actionnés réciproquement et sont branchés dans les lignes entre le point de branchement du potentiomètre ou la sortie automatique et la sortie du module.

2. Module de sortie de régulateur selon la revendication 1, caractérisé par le fait que la position prédéfinie se situe dans la zone de réglage inférieure du potentiomètre (120) et que les commutateurs électroniques (S1, S2) sont actionnés par l'amplificateur différentiel (140E, 140E') en cas de sous-dépassement de la position prédéfinie.

3. Module de sortie de régulateur selon la revendication 2, caractérisé par le fait que le potentiomètre (120) est branché entre une tension positive (+10 V) et une tension négative (-1 V).

4. Module de sortie de régulateur selon la revendication 1, caractérisé par le fait que la sortie de l'amplificateur différentiel (140E) commande au moins un transistor (S1, S2) faisant office de commutateur électronique.

5. Module de sortie de régulateur selon la revendication 4, caractérisé par le fait que sont installés deux transistors (S1, S2) de conductivités différentes, lesquels sont commandés par la sortie de l'amplificateur différentiel (140E), l'un d'entre eux étant branché dans la ligne du signal de commande manuel et l'autre dans la ligne du signal automatique.

6. Module de sortie de régulateur selon la revendication 4, caractérisé par deux transistors (S1, S2) de conductivités identiques et le branchement en série d'un inverseur (140E') avec l'amplificateur différentiel (140E), un transistor (S2) étant commandé par l'amplificateur différentiel et l'autre transistor (S1) par l'inverseur.

7. Module de sortie de régulateur selon la revendication 3, caractérisé par le fait qu'une position d'enclenchement est prévue entre le potentiomètre (120) et la prise dans la zone de transition entre la tension positive et la tension négative.

8. Module de sortie de régulateur selon la revendication 1, muni d'un système à microprocesseur présentant une unité de traitement centrale (CPU) et qui délivre le signal de sortie du régulateur en fonctionnement automatique, caractérisé par le fait que l'état à la sortie de l'amplificateur différentiel (140E) est lu par le biais d'une borne de l'unité de traitement centrale (CPU - 260).
